# EUROPÄISCHE PATENTSCHRIFT

(11) **EP 0 594 927 B1**
(45) Veröffentlichungstag und Bekanntmachung des Hinweises auf die Patenterteilung: **17.04.1996**
(21) Anmeldenummer: 93100842.9
(22) Anmeldetag: 21.01.1993
(51) Int. Cl.: B21D 53/34

(54) **Verfahren zur Herstellung einer Bremsbacke**
Method of producing a brake shoe
Procédé pour la fabrication d'une mâchoire

(30) Priorität: 30.10.1992 DE 4236636
(43) Veröffentlichungstag der Anmeldung: 04.05.1994
(73) Patentinhaber: Leifeld GmbH & Co., D-59229 Ahlen (DE); Kirschdorf, Dieter, D-46282 Dorsten (DE)
(72) Erfinder: Deggau, Wolf-Dieter, W-4730 Ahlen (DE); Kirschdorf, Dieter, W-4270 Dorsten (DE)
(74) Vertreter: Schulze Horn, Stefan, Dipl.-Ing. M.Sc.

(56) Entgegenhaltungen:
- EP-A- 0 204 032
- DE-A- 3 048 886
- FR-A- 2 033 349
- GB-A- 2 200 060

## Beschreibung

Die Erfindung betrifft ein Verfahren zur Herstellung einer Bremsbacke, nach dem Oberbegriff des Patentanspruchs 1.

Es sind unterschiedliche Verfahren zur Herstellung einer Bremsbacke bekannt:

In einem ersten bekannten Verfahren wird ein in Form eines Kreisbogens vorgeformtes Blechstück mit einem annähernd sichelförmigen Blechsteg verschweißt. Dieses Verfahren hat den Nachteil, daß zwei Einzelteile zueinander positioniert und dann verschweißt werden müssen, was einerseits einen relativ hohen Arbeitsaufwand erfordert und was andererseits dazu führt, daß eine hohe Maßgenauigkeit schwer erreichbar ist. Außerdem stellt eine Schweißverbindung eine mögliche Schwachstelle der Bremsbacke dar, die unter ungünstigen Umständen im Betrieb der Bremse zu Störungen führen kann.

Ein weiteres bekanntes Verfahren schlägt vor, zwei im Querschnitt L-förmige, in Form eines Kreisbogens vorgeformte Blechstücke Rücken an Rücken anzuordnen und durch Schweißen oder Vernieten miteinander zu verbinden. Auch bei diesem Verfahren ist ein relativ hoher Arbeitsaufwand erforderlich und es können keine engen Maßtoleranzen eingehalten werden. Zudem ist eine so hergestellte Bremsbacke relativ schwer, da relativ viel Blechmaterial insbesondere im Bereich der Rippe, die ja doppellagig ist, eingesetzt wird.

Ein drittes bekanntes Verfahren ist die Herstellung von Bremsbacken im Gußverfahren aus Gußeisen oder Leichtmetall, wobei hier aber der Herstellungsaufwand infolge der erforderlichen Gußformen sehr hoch ist. Nachteilig ist hierbei auch noch, daß gegossene Bremsbacken einer höheren Bruchgefahr unterliegen als aus Blech bestehende Bremsbacken.

Ein viertes bekanntes Verfahren, nach den Obergriff von Anspruch 1, ist der GB-A-2 200 060 zu entnehmen.

Es stellt sich daher die Aufgabe, ein Verfahren zur Herstellung einer Bremsbacke der eingangs genannten Art anzugeben, mit welchem bei vertretbarem Herstellungsaufwand eine stabile und betriebssichere und gleichzeitig leichte Bremsbacke herstellbar ist.

Die Lösung dieser Aufgabe gelingt erfindungsgemäß durch ein Verfahren der eingangs genannten Art mit den kennzeichnenden Merkmalen des Patentanspruchs 1.

Die vorliegende Erfindung ermöglicht vorteilhaft die Herstellung einer einstückigen Bremsbacke aus Blech, wodurch die Bremsbacke einerseits eine sehr hohe Stabilität und andererseits ein geringes Gewicht erhält. Außerdem besitzen die so hergestellten Bremsbacken eine sehr exakte Form, insbesondere hinsichtlich der Krümmung ihrer den Bremsbelag aufnehmenden Außenfläche, was eine verbesserte Maßanpassung und damit ein verbessertes Zusammenwirken zwischen Bremsbacke mit Bremsbelag einerseits und der zugehörigen Bremstrommel andererseits gewährleistet. Beide Arten des Umformens führen zu einem Ring mit einem T-förmigen Querschnitt, wobei der T-Querbalken nach außen weist und eine zylindrische Außenfläche des Ringes bildet. In diesem Bereich wird das Gefüge des den Ring bildenden Materials durch das Umformen so beeinflußt, daß sich eine besonders hohe Festigkeit des Ringes in dem umgeformten Teil ergibt.

Im einfachsten Fall kann die in dem Verfahren eingesetzte Blechronde eine einfache flache Kreisscheibe sein. Eine alternative Ausgestaltung des Verfahrens sieht vor, daß vor dem Formen des Ringes der radial innere Bereich der Ronde durch Bohren und/oder Fräsen und/oder Stanzen und/oder Schneiden mit erforderlichen Durchbrechungen und/oder der gewünschten Kontur der Stege versehen wird. In dieser Verfahrensausgestaltung wird also ein Teil der Bearbeitungsschritte, die für die Formgebung des Steges der Bremsbacke erforderlich sind, vor das Formen des Ringes gelegt, da hier die Ronde noch ein flaches Teil ist, welches vergleichsweise einfach durch die genannten mechanischen Bearbeitungsverfahren bearbeitbar ist.

Eine andere Verfahrensausgestaltung schlägt vor, daß nach dem Formen des Ringes und vor dem Teilen des Ringes dieser durch Bohren und/oder Fräsen und/oder Stanzen und/oder Schneiden mit erforderlichen Durchbrechungen und/oder der gewünschten Kontur der Stege versehen wird. An dieser Stelle des Verfahrens liegt noch ein geschlossener Ring vor, der noch ein einstückiges Bauteil ist, aus welchem dann zwei oder mehr Bremsbacken herstellbar sind. Dieses einstückige Bauteil kann dann durch die genannten Bearbeitungsverfahren zugleich für zwei oder mehr Bremsbacken bearbeitet werden.

Schließlich können innerhalb dieses Verfahrens auch nach dem Teilen des Ringes in die Ringabschnitte diese durch Bohren und/oder Fräsen und/oder Stanzen und/oder Schneiden mit erforderlichen Durchbrechungen und/oder der gewünschten Kontur der Stege versehen werden. In dieser Verfahrensausgestaltung werden also die einzelnen Ringabschnitte, aus denen jeweils eine einzelne Bremsbacke hergestellt wird, bearbeitet, was aufgrund deren geringerer Größe und der dadurch erforderlichen geringeren Arbeitskräfte oder kleineren Werkzeuge vorteilhaft sein kann.

Es besteht auch die Möglichkeit, die für die Stege der Bremsbacken erforderlichen Bearbeitungsschritte aufzuteilen und zu unterschiedlichen Verfahrenszeitpunkten auszuführen.

Das Formen des Ringes aus der Ronde erfolgt zweckmäßig auf einer Drückmaschine, da solche Maschinen und die auf ihnen ausführbaren Umformverfahren bekannt und bewährt und für das erfindungsgemäße Verfahren geeignet sind.

Zur Vermeidung von Schwachstellen und zur weiteren Vergrößerung der mechanischen Stabilität der mit dem Verfahren hergestellten Bremsbacken ist vorgesehen, daß beim Formen des Ringes ein ausgerundeter Übergang zwischen dem inneren, radialen Teil und dem äußeren, axialen Teil des Ringes erzeugt wird. Hierdurch erhalten die Bremsbacken einen entsprechend ausgerundeten Übergang von dem Steg zu dem außenliegenden, den Bremsbelagträger bildenden Teil, was eine höhere Stabilität der Bremsbacke bei geringerem Materialeinsatz und damit geringerem Gewicht ermöglicht.

Zur weiteren Optimierung des Verhältnisses von Stabilität zu Gewicht der Bremsbacke ist vorgesehen, daß beim Formen des Ringes der äußere, axiale Teil des Ringes zu einem Körper gleicher Biegespannungen mit zu seinen freien Enden hin abnehmender Materialstärke umgeformt wird. Durch eine derart optimierte Verteilung der Materialstärke wird eine maximale Stabilität bei minimalem Gewicht der nach dem Verfahren hergestellten Bremsbacke erzielt.

Ergänzend kann beim Formen des Ringes an dem äußeren, axialen Teil des Ringes radial innenseitig und/oder außenseitig wenigstens eine in Umfangsrichtung umlaufende vorragende Rippe angeformt werden. Diese Rippe bzw. Rippen können unterschiedliche Funktionen haben: eine erste Funktion besteht in einer mechanischen Stabilisierung; eine zweite Funktion ist die Veränderung des Schwingungsverhaltens der Bremsbacke, wodurch beim Bremsen entstehende Schwingungen, die sich als unangenehmes Quietschen äußeren, vermindert oder verhindert werden können. Das Anformen einer Rippe oder eines Paares von Rippen auf der radial äußeren Seite des Ringes, insbesondere an dessen seitlichen Kanten, führt zu einer Bremsbacke, welche seitliche Anlagekanten für einen aufzubringenden Bremsbelag aufweisen, die dessen exakte und vorschriftsmäßige Positionierung gewährleisten.

Eine andere Ausgestaltung der Erfindung schlägt vor, daß beim Formen des Ringes an dem äußeren, axialen Teil des Ringes radial innenseitig und/oder außenseitig mehrere in Axialrichtung verlaufende Rippen angeformt werden. Auch diese Rippen dienen zur mechanischen Stabilisierung und Schwingungsbeeinflussung der Bremsbacke.

Schließlich schlägt das Verfahren noch vor, daß als Blechronde eine Stahl- oder Aluminiumronde verwendet wird.

Der zu der Bremsbacke gehörende Bremsbelag wird vorzugsweise aufgeklebt, da diese Verbindungsart sehr schnell auszuführen ist und da hierdurch das Einbringen von Bohrungen bzw. Löchern in der Bremsbacke und im Bremsbelag sowie deren gegenseitige Vernietung entbehrlich werden.

Im folgenden wird das erfindungsgemäße Verfahren anhand von Zeichnungen erläutert. Die Figuren der Zeichnungen zeigen:
- Figur 1: eine Ronde als Ausgangsmaterial für das Verfahren, in einem Teil-Querschnitt,
- Figur 2: die Ronde während eines ersten Umformschrittes durch Stauchen.
- Figur 3: die Ronde am Ende eines zweiten Umformschrittes durch Flachdrücken,
- Figur 4: eine Ronde in einer ersten Ausführung als Ausgangsmaterial für das Verfahren, in Draufsicht,
- Figur 5: eine Ronde in einer zweiten Ausführung, ebenfalls in Draufsicht,
- Figur 6: einen im Verlauf des Verfahrens mittels Umformens aus einer Ronde hergestellten Ring mit den Konturen von Bremsbacken, in einer ersten Ausführung,
- Figur 7: einen im Verlauf des Verfahrens geformten Ring mit den Konturen von Bremsbacken, in einer zweiten Ausführung,
- Figur 8: eine nach dem Verfahren hergestellte Bremsbacke in einer ersten Ausführung, im Teil-Querschnitt,
- Figur 9: eine nach dem Verfahren hergestellte Bremsbacke in einer zweiten Ausführung, im Teil-Querschnitt, und
- Figur 10: eine nach dem Verfahren hergestellte Bremsbacke in einer dritten Ausführung, im Teil-Querschnitt.

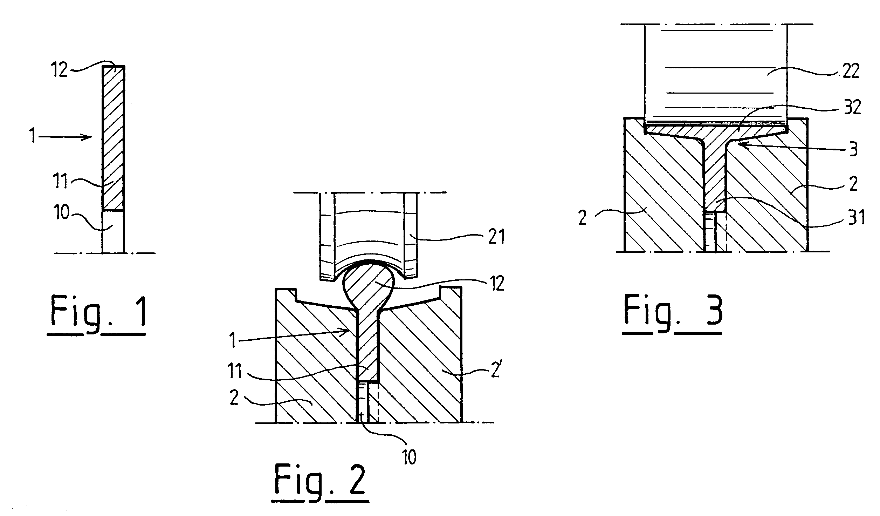

Figur 1 der Zeichnung zeigt als ein Beispiel für das Ausgangsmaterial des Verfahrens eine flache Blechronde 1, die die Form eines Kreisringes hat. Im Zentrum der Ronde 1 befindet sich eine Durchbrechung 10, an welche sich nach außen hin der radial innere Bereich 11 und noch weiter nach außen hin der radial äußere Bereich 12 der Ronde 1 anschließen. Die Blechronde 1 besteht aus Stahl oder Aluminium und besitzt über ihren Radius eine konstante Dicke.

Zur Ausführung eines ersten Umformschrittes wird die Ronde 1 zwischen zwei Teilen 2, 2' eines drehantreibbaren Werkzeuges einer Drückmaschine eingespannt, wie dies die Figur 2 zeigt. Dabei wird der radial innere Bereich 11 der Ronde 1 fest eingeklemmt; die zentrale Durchbrechung 10 in der Ronde 1 dient zu deren Zentrierung auf den Werkzeugteilen 2, 2'. Die Werkzeugteile 2, 2' sind hier rotationssymmetrisch, wobei in den Figuren 2a und 2b lediglich die eine Hälfte oberhalb der durch eine strichpunktierte Linie angedeuteten Drehachse dargestellt ist.

In einem Verfahrensschritt gemäß Figur 2 wird die eingespannte, sich drehende Ronde 1 in ihrem radial äußeren Bereich 12 mittels einer zustellbaren und drehbaren Stauchrolle 21 in eine im Querschnitt tropfenartige Form umgeformt.

In einem weiteren, sich an den Verfahrensschritt gemäß Figur 2 anschließenden Verfahrensschritt wird der äußere Bereich der Ronde zu einem äußeren Ringteil 32 flach gedrückt, wobei hierzu eine zustellbare zylindrische Drückrolle 22 Verwendung findet. Durch diesen Verfahrensschritt entsteht ein im Querschnitt T-förmiger Ring 3 mit einer zylindrischen Außenfläche und einem radial inneren Teil 31, der zwischen den Werkzeugteilen 2, 2' des Drückfutters liegt. Der Übergang vom inneren Teil 31 zum äußeren Teil 32 wird dabei stabilitätsfördernd ausgerundet. Außerdem wird die Materialstärke des äußeren Teils 32 zu seinen freien Enden hin stetig vermindert, was Gewicht spart ohne Stabilitätsverlust. Der so erzeugte Ring 3 wird nach Herausnahme aus den Werkzeugteilen 2, 2' einer weiteren Bearbeitung unterzogen, die weiter unten erläutert wird.

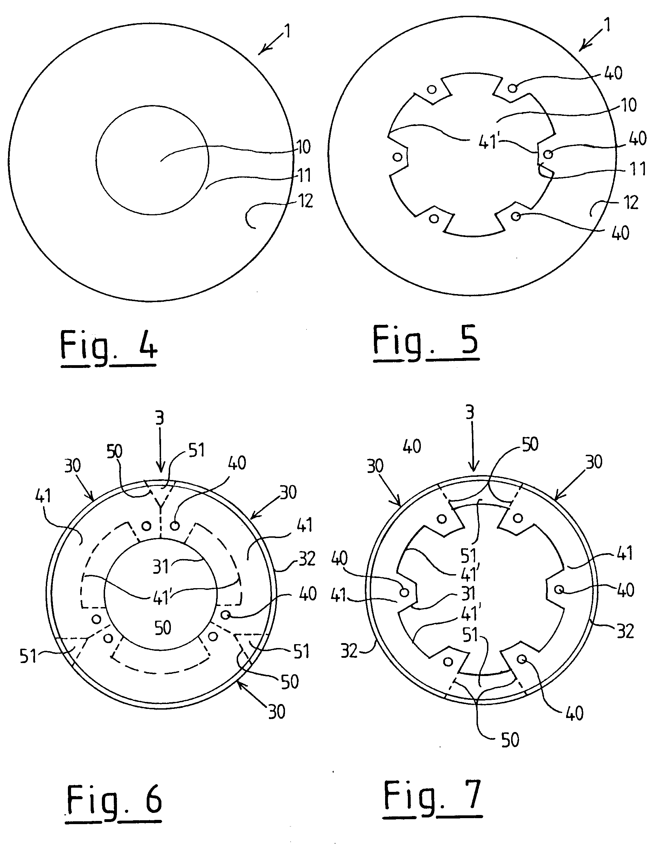

Die Figur 4 zeigt die in Figur 1 im Teil-Querschnitt gezeigte Ronde 1 in Draufsicht, wobei hier die Kreisringform besonders deutlich wird. Im Zentrum der Ronde 1 liegt die mittige Durchbrechung 10, nach außen hin folgen dann der radial innere Bereich 11 und der radial äußere Bereich 12 der Ronde 1.

Eine andere Form der Ronde 1, die ebenfalls als Ausgangsmaterial für das Umformen durch Drückwalzen gemäß den Figuren 2 und 3 eingesetzt werden kann, zeigt die Figur 5. Die Ronde 1 ist hier ebenfalls mit einem kreisförmigen äußeren Umriß flach ausgebildet; der Innenumfang der Ronde 1 ist hier aber nicht kreisrund, sondern mit einer Kontur 41' ausgeformt, die der Kontur von zwei aus dieser Ronde 1 herzustellenden Bremsbacken, genauer deren Stege, schon weitestgehend entspricht. Weiterhin sind außer der zentralen Durchbrechung 10 in dieser Ronde 1 schon mehrere kleine Durchbrechungen oder Bohrungen 40 angebracht, die für die spätere Funktion der Bremsbacke benötigt werden.

Figur 6 und 7 zeigen je einen Ring 3, wie er nach dem Verfahrensschritt gemäß Figur 3 vorliegt, in Draufsicht. Wie aus beiden Figuren ersichtlich ist, ist der Ring 3 kreisrund und besitzt einen radial inneren Teil 31 sowie einen radial äußeren Teil 32 mit einer zylindrischen Außenfläche.

Der Ring 3 gemäß Figur 6 ist aus einer Ronde 1 gemäß Figur 4 hergestellt, wobei hier die innere Begrenzung des radial inneren Teils 31 des Ringes 3 noch kreisrund ist. Im weiteren Verlauf des Herstellungsverfahrens wird dieser Ring 3 mittels aus der Metallbearbeitung bekannter Verfahren entlang den Teilungslinien 50, die durch gestrichelte Linien angedeutet sind, in in diesem Beispiel insgesamt drei Ringabschnitte 30 geteilt, aus denen jeweils eine Bremsbacke durch weitere Bearbeitung entsteht. Zwischen benachbarten Teilungslinien 50 fallen lediglich kleine Abfallstücke 51 an, was eine gute Materialausnutzung ergibt. Im Verlauf der weiteren Bearbeitung werden dann noch Durchbrechungen oder Bohrungen 40 im inneren Teil 31 des Ringes 30, der dann die Stege 41 der Bremsbacke bildet, erzeugt. Außerdem wird die Kontur 41' der Stege 41, die hier durch gestrichelte Linien angedeutet ist, z.B. durch Stanzen erzeugt. Hiernach liegt dann eine Bremsbacke vor, auf die ein Bremsbelag aufgebracht werden kann.

Figur 7 der Zeichnung zeigt ein Beispiel für einen Ring 3, der aus einer Ronde 1 gemäß Figur 5 geformt ist. Der radial innere Teil 31 des Ringes 3 besitzt bereits die Kontur 41' des Steges 41 der aus dem Ring 3 zu erzeugenden Bremsbacken, wobei der Ring 3 in diesem Ausführungsbeispiel in zwei Ringabschnitte 30 geteilt wird. Die Teilung des Ringes 3 in die beiden Ringabschnitte 30, aus denen jeweils eine Bremsbacke hergestellt wird, erfolgt entlang von Teilungslinien 50, die durch gestrichelte Linien angedeutet sind. Die Teilung kann beispielsweise durch Schneiden, Stanzen oder kombinierte Bearbeitungsverfahren, die an sich bekannt sind, vorgenommen werden. Zwischen den beiden durch die Teilung entstehenden Ringabschnitten 30 fallen jeweils wieder relativ kleine Abfallstücke 51 an, die nur einen geringen Teil des insgesamt eingesetzten Materials darstellen. Im Verlauf der Stege 41 sind hier wieder mehrere kleine Durchbrechungen oder Bohrungen 40 vorgesehen, die die Bremsbacke für ihre Funktion benötigt.

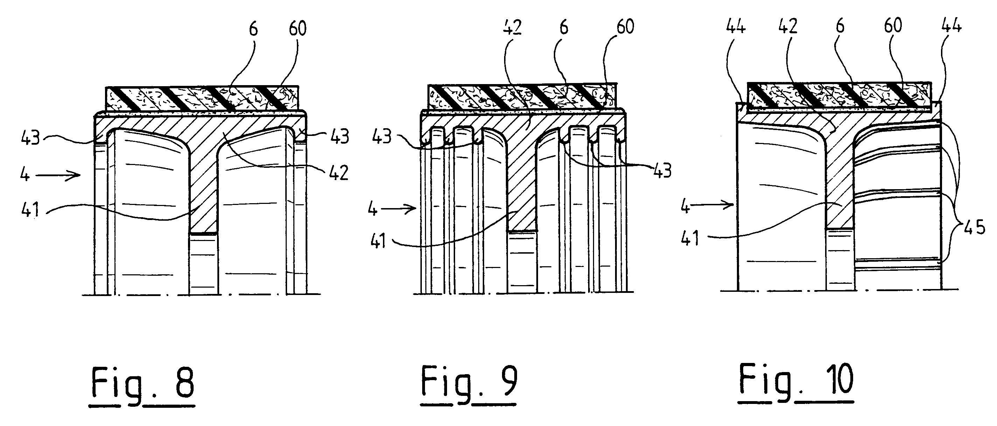

Bei dem in Figur 3 gezeigten Beispiel des Ringes 3 ist dessen radial äußerer, axial verlaufender Teil 32 außenwie innenseitig glattflächig ausgebildet. Dementsprechend haben auch die aus einem derartigen Ring 3 hergestellten Bremsbacken eine glattflächige Außen- und Innenseite des Bremsbelagträgers. Es sind hier aber auch andere Ausgestaltungen der Bremsbacken möglich, wofür einige Beispiele in den Figuren 8 bis 10 angegeben sind.

Figur 8 der Zeichnung zeigt in einem Teil-Querschnitt ein erstes Ausführungsbeispiel einer Bremsbacke 4, die, wie alle hier gezeigten Bremsbacken, eine einen radialen inneren Teil bildende Stege 41 sowie einen senkrecht dazu sich erstreckenden, axialen äußeren Teil, der den Bremsbelagträger 42 bildet, aufweist. Die Bremsbacke 4 gemäß Figur 8 besitzt als Besonderheit an der Unterseite des Bremsbelagträgers 42 randseitig je eine nach unten hin vorstehende Rippe 43. Diese Rippe 43 dient einerseits zur Stabilisierung des Bremsbelagträgers 42 und zum anderen zur Beeinflussung des Schwingungsverhaltens der Bremsbacke 4, insbesondere zur Verminderung oder Vermeidung von Quietschgeräuschen beim Bremsen. Auf die Außenfläche des Bremsbelagträgers 42 ist hier ein üblicher Bremsbelag 6 in bekannter Weise mittels einer Klebstoffschicht 60 aufgesetzt.

Figur 9 der Zeichnung zeigt in der gleichen Darstellungsweise wie Figur 8 ein weiteres Ausführungsbeispiel einer Bremsbacke 4, die ebenfalls einen radial verlaufenden Steg 41, einen quer dazu verlaufenden Bremsbelagträger 42 sowie einen darauf mittels der Klebstoffschicht 60 aufgeklebten Bremsbelag 6 aufweist. Im Unterschied zu dem zuvor anhand von Figur 8 beschriebenen Ausführungsbeispiel sind hier an der Unterseite des Bremsbelagträgers 42 beiderseits des Steges 41 jeweils drei nach unten hin vorstehende Rippen 43 vorgesehen, die neben ihrer stabilisierenden und schwingungsdämpfenden Funktion auch noch die Funktion von Kühlrippen durch eine wesentlich Vergrößerung der unteren Oberfläche des Bremsbelagträgers 42 erfüllen. Hierdurch wird eine bessere Wärmeableitung aus dem Bremsbelag 6 und aus der Bremsbacke 4 bei starker Beanspruchung erreicht.

Figur 10 der Zeichnung schließlich zeigt ebenfalls in der Darstellungsweise der Figuren 8 und 9 als letztes Ausführungsbeispiel eine Bremsbacke 4, bei der der Bremsbelagträger 42 an seiner dem Bremsbelag 6 zugewandten Seite randseitig je einen nach oben hin vorstehende Rippe 44 aufweist. Diese Rippen 44 dienen insbesondere dazu, eine exakte Positionierung des Bremsbelages 6 auf dem Bremsbelagträger 42 sicherzustellen, wobei die Höhe dieser Rippen 44 klein ist gegenüber der Bremsbelagdicke. Neben den in Umfangsrichtung verlaufenden Rippen 44 besitzt das hier dargestellt Ausführungsbeispiel der Bremsbacke 4 noch unterseitig an dem Bremsbelagträger 42 in Axialrichtung verlaufende Rippen 45. Diese Rippen 45 dienen insbesondere als stabilisierende und schwingungsdämpfende Elemente der Bremsbacke 4, wobei auch die Rippen 44 zusätzlich diese Funktion ausüben.

Außer wie in den Figuren 8 bis 10 dargestellt, können auch Kombinationen von Ripppen 43, 44, 45 sowohl an der Oberseite wie auch an der Unterseite des Bremsbelagträgers 42 vorgesehen sein. Die Ausbildung der Rippen 43, 44, 45 erfolgt vorteilhaft während des Formens des Ringes 3, so daß hierfür keine besonderen Arbeitsschritte erforderlich sind. Lediglich die Werkzeugteile 2, 2' der Drückmaschine sowie die eingesetzten Drückrollen 20, 21, 22 müssen entsprechend geformt und ausgebildet, erforderlichenfalls auch mehrtelig, sein.

## Patentansprüche

1. Verfahren zur Herstellung einer Bremsbacke (4), insbesondere für Trommelbremsen von Kraftfahrzeugen, mit einem Bremsbelagträger (42), dessen Außenfläche die Form eines Kreiszylinderabschnitts hat, und mit einem unter dem Bremsbelagträger (42) angeordneten, bogen- oder sichelförmigen Steg (41), über welchen die Betätigungskräfte der Bremse auf den Bremsbelagträger (42) übertragen werden, wobei
aus einer Blechronde (1) ein Ring (3) mit zylindrischer Außenfläche und T-förmigem Querschnitt geformt wird und
der Ring (3) in zwei oder mehr, je eine Bremsbacke (4) bildende Ringabschnitte (30) geteilt wird, **dadurch gekennzeichnet,** daß der Ring durch Stauchen und anschließendes Flachdrücken geformt wird.

2. Verfahren nach Anspruch 1, dadurch gekennzeichnet, daß vor dem Formen des Ringes (3) der radial innere Bereich (11) der Ronde (1) durch Bohren und/oder Fräsen und/oder Stanzen und/oder Schneiden mit erforderlichen Durchbrechungen (40) und/oder der gewünschten Kontur (41') der Stege (41) versehen wird.

3. Verfahren nach Anspruch 1 oder 2, dadurch gekennzeichnet, daß nach dem Formen und vor dem Teilen des Ringes (3) dieser durch Bohren und/oder Fräsen und/oder Stanzen und/oder Schneiden mit erforderlichen Durchbrechungen (40) und/oder der gewünschten Kontur (41') der Stege (41) versehen wird.

4. Verfahren nach einem der Ansprüche 1 bis 3, dadurch gekennzeichnet, daß nach dem Teilen des Ringes (3) in die Ringabschnitte (30) diese durch Bohren und/oder Fräsen und/oder Stanzen und/oder Schneiden mit erforderlichen Durchbrechungen (40) und/oder der gewünschten Kontur (41') der Stege (41) versehen werden.

5. Verfahren nach einem der Ansprüche 1 bis 4, dadurch gekennzeichnet, daß das Formen des Ringes (3) auf einer Drückmaschine durchgeführt wird.

6. Verfahren nach einem der Ansprüche 1 bis 5, dadurch gekennzeichnet, daß beim Formen des Ringes (3) ein ausgerundeter Übergang zwischen dem inneren, radialen Teil (31) und dem äußeren, axialen Teil (32) des Ringes (3) erzeugt wird.

7. Verfahren nach einem der Ansprüche 1 bis 6, dadurch gekennzeichnet, daß beim Formen des Ringes (3) der äußere, axiale Teil (32) des Ringes (3) zu einem Körper gleicher Biegespannungen mit zu seinen freien Enden hin abnehmender Materialstärke umgeformt wird.

8. Verfahren nach einem der Ansprüche 1 bis 7, dadurch gekennzeichnet, daß beim Formen des Ringes (3) an dem äußeren, axialen Teil (32) des Ringes (3) radial innenseitig und/oder außenseitig wenigstens eine in Umfangsrichtung umlaufende vorragende Rippe (43, 44) angeformt wird.

9. Verfahren nach einem der Ansprüche 1 bis 8, dadurch gekennzeichnet, daß beim Formen des Ringes (3) an dem äußeren, axialen Teil (32) des Ringes (3) radial innenseitig und/oder außenseitig mehrere in Axialrichtung verlaufende Rippen (45) angeformt werden.

10. Verfahren nach einem der Ansprüche 1 bis 9, dadurch gekennzeichnet, daß als Blechronde (1) eine Stahl- oder Aluminiumronde verwendet wird.

## Claims

1. Method of producing a brake shoe (4) particularly for drum brakes of automobiles comprising a brake lining carrier (42) the outer surface thereof having the form of a regular cylinder section, and an arc shaped or sickle shaped web (41) arranged underneath the brake lining carrier (42) with the actuating forces of the brake transmitted through the web (41), wherein a ring (3) with a cylindrical outer surface and a T-shaped cross section is formed out of a sheet metal blank, and wherein the ring (3) is divided into two or more ring sections (30) each forming a brake shoe (4),
**characterized in**
that the ring is formed by upsetting and subsequent flat spinning.

2. Method according to claim 1, characterized in that prior to forming the ring (3) the radially inner area (11) of the sheet metal blank (1) is provided with required openings (40) and/or the required contour (41') of the webs (41) by boring and/or milling and/or punching and/or cutting.

3. Method according to claim 1 or 2, characterized in that after the forming and prior to the dividing of the ring (3) the latter is provided with required openings (40) and/or the required contour (41') of the webs (41) by boring and/or milling and/or punching and/or cutting.

4. Method according to one of the claims 1 to 3, characterized in that after dividing the ring (3) into the ring sections (30) the latter are provided with required openings (40) and/or the required contour (41') of the webs (41) by boring and/or milling and/or punching and/or cutting.

5. Method according to one of the claims 1 to 4, characterized in that the forming of the ring (3) is accomplished on a spinning machine.

6. Method according to one of the claims 1 to 5, characterized in that in forming the ring (3) a rounded transition range between the inner radial area (31) and the outer axial area (32) of the ring (3) is produced.

7. Method according to one of the claims 1 to 6, characterized in that in forming the ring (3) the outer axial area (32) of the ring (3) is formed into a body of equal bending stress with diminishing material thickness towards the free ends thereof.

8. Method according to one of the claims 1 to 7, characterized in that in forming the ring (3) at least one circumferentially extending protruding rib (43, 44) is formed radially inwards and/or outwards at the outer axial area (32) of the ring (3).

9. Method according to one of the claims 1 to 8, characterized in that in forming the ring (3) several ribs (45) extending in axial direction are formed radially inwards and/or outwards at the outer axial area (32) of the ring (3).

10. Method according to one of the claims 1 to 9, characterized in that as a sheet metal blank (1) a steel or aluminium blank is used.

## Revendications

1. Procédé de fabrication d'une mâchoire de frein (4), en particulier pour des freins à tambour de véhicules automobiles, comprenant un support de garniture de frein (42) dont la surface extérieure a la forme d'un segment cylindrique circulaire, et comprenant une aile verticale (41) en forme d'arc ou de croissant qui est disposée sous le support de garniture de frein (42) et par laquelle les forces d'actionnement du frein peuvent être transmises au support de garniture de frein (42), un anneau (3) étant formé à partir d'un rond de tôle (1) avec une surface extérieure cylindrique et une section transversale en T et l'anneau (3) étant divisé en deux segments annulaires (30) ou plus formant chacun une mâchoire de frein (4), caractérisé en ce que l'anneau (3) est formé par refoulage puis aplatissage.

2. Procédé selon la revendication 1, caractérisé en ce que avant le formage de l'anneau (3), la zone radialement intérieure (11) du rond (1) est pourvue d'ajours (40) nécessaires et/ou du profil (41') souhaité des ailes verticales (41) par perçage et/ou fraisage et/ou estampage et/ou découpage.

3. Procédé selon la revendication 1 ou 2, caractérisé en ce que après le formage et avant la division de l'anneau (3), ce dernier est muni d'ajours (40) nécessaires et/ou du profil (41') souhaité des ailes verticales (41) par perçage et/ou fraisage et/ou estampage et/ou découpage.

4. Procédé selon l'une des revendications 1 à 3, caractérisé en ce que après la division de l'anneau (3) en segments annulaires (30), ces derniers sont munis d'ajours (40) nécessaires et/ou du profil (41') souhaité des ailes verticales (41) par perçage et/ou fraisage et/ou estampage et/ou découpage.

5. Procédé selon l'une des revendications 1 à 4, caractérisé en ce que le formage de l'anneau (3) s'effectue sur une machine de repoussage.

6. Procédé selon l'une des revendications 1 à 5, caractérisé en ce que lors du formage de l'anneau (3), on réalise une transition arrondie entre la partie radiale intérieure (31) et la partie axiale extérieure (32) de l'anneau (3).

7. Procédé selon l'une des revendications 1 à 6, caractérisé en ce que lors du formage de l'anneau (3), la partie axiale extérieure (32) de l'anneau (3) est façonnée pour obtenir un corps présentant les mêmes contraintes de flexion et une épaisseur qui va en diminuant vers ses extrémités libres.

8. Procédé selon l'une des revendications 1 à 7, caractérisé en ce que lors du formage de l'anneau (3), on forme sur la partie axiale extérieure (32) de l'anneau (3), radialement sur le côté intérieur et/ou extérieur, au moins une nervure (43, 44) saillante s'étendant dans la direction périphérique.

9. Procédé selon l'une des revendications 1 à 8 caractérisé en ce que lors du formage de l'anneau (3), on forme sur la partie axiale extérieure (32) de l'anneau (3), radialement sur le côté intérieur et/ou extérieur, plusieurs nervures (45) s'étendant dans la direction axiale.

10. Procédé selon l'une des revendications 1 à 9, caractérisé en ce que l'on utilise comme rond de tôle (1) un rond en acier ou en aluminium.
